# EUROPÄISCHE PATENTSCHRIFT

(11) **EP 2 447 710 B1**
(45) Veröffentlichungstag und Bekanntmachung des Hinweises auf die Patenterteilung: **07.09.2016**
(21) Anmeldenummer: 11186560.6
(22) Anmeldetag: 25.10.2011
(51) Int. Cl.: G01N 23/20, H01J 35/10

(54) **Verfahren und Vorrichtung zur röntgendiffraktometrischen Analyse bei unterschiedlichen Wellenlängen mittels einer Röntgenanode bestehend aus einer gesinterten Pulvermischung**
Method of diffractometric analysis at different wavelengths using an X-ray anode comprising a sintered powder mixture and corresponding device
Procédé et dispositif d'analyse radiodiffractométrique pour des longueurs d'ondes différentes utilisant une anode à rayons X comprenant une mixture en poudre frittée

(30) Priorität: 27.10.2010 DE 102010043028
(43) Veröffentlichungstag der Anmeldung: 02.05.2012
(73) Patentinhaber: Bruker AXS GmbH, 76187 Karlsruhe (DE)
(72) Erfinder: Schipper, Rolf, 76189 Karlsruhe (DE); Lange, Joachim, 76767 Hagenbach (DE)
(74) Vertreter: Kohler Schmid Möbus Patentanwälte

(56) Entgegenhaltungen:
- EP-A- 1 739 413
- JP-A- 5 135 722
- JP-A- 11 304 728
- US-A- 5 491 738
- US-A1- 2010 092 699
- SUNG-DAE CHUN: "Property of a CZT Semiconductor Detector for Radionuclide Identification", JOURNAL OF NUCLEAR SCIENCE AND TECHNOLOGY, Bd. suppl. 5, 1. Juni 2008 (2008-06-01), Seiten 421-424, XP55025171,
- DATABASE WPI Week 200881 Thomson Scientific, London, GB; AN 2008-N85974 XP002668827, & CN 101 290 852 A (UNIV XIAN TECHNOLOGY) 22. Oktober 2008 (2008-10-22)

## Beschreibung

### Hintergrund der Erfindung

Die Erfindung betrifft ein Verfahren und eine Vorrichtung zur Durchführung einer röntgendiffraktrometrischen Analyse einer kristallinen und/oder amorphen Probe, mittels eines röntgenoptischen Aufbaus mit einer Röntgenquelle, die eine aus einer Mischanordnung mindestens zweier Metalle aufgebaute Röntgenanode aufweist.

Eine derartige Röntgenanode ist bekannt aus DE 195 36 917 A1.

In der Röntgendiffraktometrie (XRD) werden derzeit diskrete Röntgenenergien (meist K-alpha-Strahlung des Anodenmaterials) verwendet, um an dreidimensionalen periodischen Strukturen auf atomarer Skala (Kristalle) gemäß dem Bragg'schen Gesetz Interferenzen (Reflexe) zu erzeugen. Die Winkel-Lage der Reflexe und deren Intensität enthalten wichtige Informationen über die atomare- und Mikrostruktur der zu untersuchenden Substanzen.

Dabei können bestimmte Materialeigenschaften der Kristallproben durch spezielle Röntgenlinienenergien untersucht und bestimmt werden. Dazu zählen nicht nur Absorption, anomale Dispersion, erfassbarer Winkelbereich, störende oder nutzbare Röntgenfloureszenz-Signale der Probe, sondern auch noch weitere wellenlängenabhängige Effekte. Typische Metalle für XRD-Röntgenröhren sind Cu (1,54184Angström), Co (1,79026Angström), Cr (2,29100Angström), Fe (1,93736Angström) und Mo (0,71073Angström), aber auch z.B. Ag (rel. hohe Energien) wird manchmal verwendet.

Typische Anwendungen/Untersuchungen für die verschiedenen charakteristischen Energien: Cu-Strahlung ist für die meisten XRD-Untersuchungen geeignet, während Mo-Strahlung u.a. bevorzugt wird bei Untersuchungen von Stählen und Metall-Legierungen im Bereich von Ti (A=22) bis etwa Zn (A=30). Co-Strahlung wird oft in Zusammenhang mit Fe-haltigen Proben verwendet, denn die störende Eisen-Fluoreszenz-Strahlung kann oft nicht anders vermieden werden. Auch Fe-Strahlung verwendet man u.a. für Fe-haltige Proben, ebenso für Mineralien, bei denen man keine Co- und Cr-Strahlung verwenden kann. Cr-Strahlung eignet sich gut für komplexe organische Substanzen und Stress-Messungen von Stählen. Die charakteristische W-Strahlung kann erst bei sehr hohen Elektronenenergien angeregt werden. W-Röhren werden deshalb angewandt, wenn eher Wert auf das Strahlungskontinuum als auf einzelne Linien gelegt wird und ist für XRD-Messungen ungeeignet.

Bis heute ist man bestrebt, Röntgenanoden für XRD zu verwenden, die aus reinen Elementmetallen bestehen, da wegen fehlender Möglichkeit zur Energiediskriminierung. Metallverunreinigungen im Anodenmaterial zu störenden Reflexen im Beugungsbild und zu Fehlinterpretationen des Messergebnisses führen können. Aus Kostengründen wird häufig ein Szintillationszähler verwendet, der zwar sehr empfindlich und in der Lage ist, einzelne Photonen zu detektieren, aber nicht die Energie von im Spektrum nahe liegenden Photonenenergien zu trennen vermag.

Gelegentlich wird an bestehenden Röntgendiffraktometern, die Röntgenröhre getauscht, um das Anodenmaterial zu wechseln und das Diffraktometer zur Messung für andere Proben vorzubereiten. Dieser Umbau kann recht zeitaufwändig sein, zumal in der Regel eine komplette Neujustierung auf den primären Strahl (ebenso der Detektorelektronik) der die Probe treffen soll, notwendig ist.

Versuche mit Anoden aus Legierungen oder anderen Metallverbindungen wurden in der Vergangenheit viele gemacht.

Im Jahr 1963 stellte das englische Patent GB 1 032 118 A ein Verfahren zur Herstellung von Metalllegierungen mit Molybdän oder Wolfram vor.

US 3,778,654 A beschreibt eine Röntgenanode aus einer W-Mo-Legierung (für Mammographie). Dabei ist Mo besonders geeignet um betroffenes knochenloses Gewebe zu untersuchen. Die Beanspruchung der Anode durch Elektronenbeschuss ist erheblich. Die Legierung von Mo mit W in einem bestimmten Verhältnis zeigt deutliche Vorteile gegenüber Anoden mit reinem Mo (Widerstandsfähigkeit, geringere therm. Ermüdung etc.)

In US 3,836,808 A wird eine Drehanode beschrieben, die zu 75% aus Mo und bis zu 25% aus einem Metall mit Ordnungszahl zwischen 39 und 46 (Y,Zr,Nb,Mo,Tc,Ru,Rh,Pd) besteht. Das Patent beschreibt, dass Anoden aus reinem Moybdän in ihrer Wirkung durch Aufrauhung abnehmen. Die beschriebenen Legierungen sind darauf ausgelegt, die Aufrauhung zu minimieren bzw. hinauszuzögern.

Bereits 1943 wurden in dem englischen Patent GB 551,897 A Anoden für Röntgenapparate für industrielle/medizinische Anwendungen beschrieben. Die vorgestellten Anoden bestehen aus einer Zusammensetzung einer fein verteilten Phase von Wolfram und einer kontinuierlichen Phase von Cu, Ag oder Au. Derartige Anoden zeigen hohen Röntgenoutput bei hoher Beständigkeit bei Beschuss mit Elektronen und gute thermische Leitfähigkeit und können durch Press- und Sinterverfahren hergestellt werden.

In EP 0 062 380 wird eine Röntgen-Anode mit Beschichtung, bestehend aus W, Mo und W-Mo-Legierung beschrieben, sowie eine Methode zur Herstellung derselben. Es wird beschrieben, wie durch Aufdampfen aus der Gasphase unter welchen Bedingungen (Temp. etc.) bestimmte Schichten aufgebracht werden können. Das Substrat wird beschrieben als eine Zusammensetzung aus Mo, Ti, Zr und C. Eine der Schichten wird beschrieben als Zusammenstzung von W, und W-Legierung mit Anteilen von Rh, Ta, Os, Ir, Pt u.ä. Elemente. Ein Layer wird beschrieben, der Re enthält.

Dabei war die Entwicklung vor allem drauf ausgelegt, haltbare, robuste Anoden bzw. Legierungen zu schaffen, wobei für die Röntgendiffraktometrie selbst nur eine spezifische Energielinie benutzt wurde.

US 7,317,783 B2 stellt eine Röntgenanode vor, die über mehrere Zonen aus verschiedenen Metallen besteht. Der Elektronenstrahl kann dabei so gelenkt werden, dass jeweils nur eine Zone getroffen wird. Auf diese Weise kann die Probe mittels einzelner Energielinien verschiedener reiner Metalle untersucht werden. Diese Erfindung zielt wiederum auf die Anregung einzelner Energielinien, wobei hier der zeitaufwändige Umbau bei Wechsel des Anodenmaterials entfällt.

DE 195 36 917 A1 stellt eine Röntgenanode für die Röntgenfloureszenzanalytik (XRF) vor. Für optimale Anregung von XRF-Proben sind mehrere Röntgenlinien im Spektrum wünschenswert. Eine Röntgenanode aus einer Mischung mehrerer Metalle ist Gegenstand der in der Druckschrift beschriebenen Erfindung und ermöglicht Multielementanalysen für XRF-Analysen. Es wird darauf hingewiesen, dass grundsätzlich alle stabilen Metallmischungen/Legierungen denkbar sind, speziell Mo und W aber vorteilhaft sind. Eine solche Anode ist vorteilhaft für die Röntgenfloureszenzanalytik, für Röntgendiffraktometer mit Szintillationszähler jedoch ungeeignet.

In den letzten Jahren nimmt die Verwendung von energiedispersiven Halbleiterdetektoren immer mehr zu, der sich entwickelnde Preisverfall ist einer der Gründe hierfür. Diese Detektoren sind in der Lage die gemessenen Photonen sehr genau einer Energie im Röntgenspektrum zuzuordnen. Sogar preiswerte Detektoren erreichen dabei Auflösungen im Bereich von wenigen hundert Elektronenvolt. Damit ist man in der Lage typische charakteristische Energielinien (s. Aufzählung oben) im Spektrum zu trennen und gesondert auszuwerten. Das geht soweit, dass sogar die K-alpha und K-beta Röntgenlinien eines Elements (in der Anode) voneinander getrennt werden können. Man erhält dann mit einer Messung (Winkelscan) Informationen über die Probe, die man aus zwei verschiedenen Energien erhält. Die simultane Messung mit 2 Wellenlängen (K-alpha & K-beta des Anodenmaterials) ist bei Verwendung eines geeigneten Detektors (XFlash von Bruker nano) schon möglich.

### Aufgabe der Erfindung

Aufgabe der vorliegenden Erfindung ist es nunmehr, ein Verfahren und eine Vorrichtung vorzustellen, mit dem röntgendiffraktometrische Untersuchungen mit mehreren charakteristischen Energielinien möglich sind, ohne dass ein Umbau oder ein Umschalten nötig ist.

### Kurze Beschreibung der Erfindung

Diese Aufgabe löst die Erfindung auf überraschend einfache und wirkungsvolle Weise dadurch, dass ein energiedispersiver Halbleiterdetektor zur Aufnahme von Zählereignissen aus der von der Probe kommenden Röntgenstrahlung verwendet wird, und dass von der Probe gebeugte oder gestreute Röntgenstrahlung mit unterschiedlichen charakteristischen Energielinien, die zu den Metallen der verwendeten Mischanordnung der Röntgenanode gehören, simultan während eines Winkelscans aufgenommen wird.

Verwendet man Röntgenröhren mit Mischanoden in Verbindung mit einem geeigneten energiedispersiven Detektor hoher Auflösung und geeigneter Auswerteelektronik (etwa XFlash von Bruker nano, Berlin) auf einem Standarddiffraktometer (z.B. D2 Phaser), dann sind Simultanmessungen mit vielen verschiedenen Energien möglich. Der XFlash-Detektor ist in der Lage die Zählereignisse in bis zu 8 Fenster im Spektrum, die beliebig gesetzt werden können, getrennt voneinander in jeweils den Fenstern zugeordneten Zählern zu zählen. Beispielsweise bei Verwendung einer Mischanode aus Cu,Co,Mo stehen im XRD-System simultan die Energien Cu-K-alpha, Cu-K-beta, Co-K-alpha, Co-K-beta, Mo-K-alpha, Mo-K-beta zur Verfügung. Die Fenster können dann auf die Energielinien im Spektrum Cu-K-alpha, Cu-K-beta, Co-K-alpha, Co-K-beta, Mo-K-alpha, Mo-K-beta gesetzt werden. Startet man einen einzigen Winkelscan zählen die zugeordneten Zähler simultan die Photonen der vorhandenen Energien und ordnen diese dem Winkel des Detektors zu. Als Ergebnis erhält man 6 Diffraktogramme, die gleichzeitig während eines einzigen Winkelscans bei unterschiedlichen Energien aufgenommen wurden. Die einzelnen Mischungsverhältnisse bei diesem Beispiel Cu/Co/Mo können so gewählt werden, dass die K-alpha-Energielinien in ihrer Intensität in etwa gleich sind.

Die Vorteile bei dieser Methode sind folgende: Ein Umbau des Systems von Cu auf Co und dann auf Mo (als Beispiel) entfällt, ebenso Neujustierungen bzw.Neuausrichtungen auf die Primärstrahlen der Cu- Co- und Mo-Röhren. Das bedeutet eine enorme Zeitersparnis. Das gleichzeitige Vorhandensein mehrerer unterschiedlicher Energien erweitert die Anwendbarkeit des Diffraktometers enorm bei gleichzeitig einfacher Bedienung. Der Bediener kann sich den/die Datensätze aussuchen, die er für seine Auswertung braucht. Außerdem kann man mit einer Kosteneinsparung rechnen, da nur 1 Röntgenröhre notwendig ist.

### Bevorzugte Ausführungsformen der Erfindung

Bei dem erfindungsgemäßen Verfahren werden die charakteristischen Energielinien sowohl der Kα als auch der Kβ Energien mehrerer oder aller in der Mischanordnung vorkommenden Metalle simultan während eines Winkelscans aufgenommen.

Bei einer weiteren Variante des erfindungsgemäßen Verfahrens werden die aufzunehmenden Zählereignisse in mehreren, vom Benutzer frei im Energiespektrum festsetzbaren Bereichen gezählt.

Eine Weiterbildung des erfindungsgemäßen Verfahrens ist dadurch gekennzeichnet, dass für jeden festgesetzten Bereich ein separates Diffraktogramm erstellt wird.

Vorteilhaft ist eine andere Variante des erfindungsgemäßen Verfahrens, bei welcher das Mischungsverhältnis der Metalle in der Röntgenanode so gewählt wird, dass ihre Kα-Energielinien bei der Messung in ihrer Intensität gleich sind oder ein anderes gewünschtes Intensitätsverhältnis aufweisen.

In den Rahmen der Erfindung gehört auch eine Vorrichtung zur Durchführung des erfindungsgemäßen Verfahrens gemäß Anspruch 5.

Als vorteilhaft wird auch eine Ausführungsform der erfindungsgemäßen Vorrichtung gesehen, bei der die Mischanordnung der Röntgenanode Cu und Co enthält.

Bei einer Weiterbildung dieser Ausführungsform der erfindungsgemäßen Vorrichtung enthält die Mischanordnung der Röntgenanode zusätzlich Cr und/oder Fe.

Vorteilhaft ist auch eine Ausführungsform der Vorrichtung, bei der die Mischanordnung der Röntgenanode zusätzlich Molybdän enthält.

Besonders bevorzugt ist eine Ausführungsform der erfindungsgemäßen Vorrichtung, welche dadurch gekennzeichnet ist, dass der energiedispersive Halbleiterdetektor ein ein- oder mehrdimensionaler Arraydetektor ist.

### Zeichnungen und detaillierte Beschreibung der Erfindung

Es zeigen:
- Fig. 1: eine schematische Darstellung einer Vorrichtung zur Durchführung des erfindungsgemäßen Verfahrens;
- Fig. 2: ein Energiespektrum der charakteristischen K-alpha- und K-beta-Linien von Cu, Co und Cr.

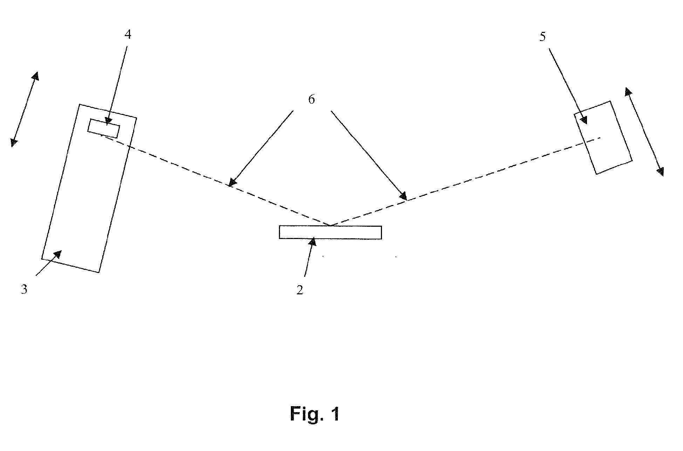

In **Fig. 1** ist eine schematische Darstellung einer zur Durchführung des Verfahrens geeigneten **Vorrichtung 1** gezeigt. Die Vorrichtung 1 umfasst eine **Röntgenquelle 3,** welche eine **Röntgenanode 4** aufweist. Bei der Röntgenanode 4 handelt es sich um eine Anode aus einer Mischanordnung mehrerer Metalle. Dabei kann es sich um eine Legierung, eine gesinterte Pulvermischung oder um eine Anordnung aus Streifen verschiedener Metalle handeln.

Von der Röntgenquelle 3 aus trifft die **Röntgenstrahlung 6** auf die **Probe 2**. Dabei kann es sich etwa um eine kristalline oder amorphe Pulverprobe oder auch um einen Siliziumwafer handeln, um nur einige Beispiele zu nennen.

Von der Probe 2 aus gelangt die gebeugte Röntgenstrahlung 6 zum **Detektor 5**, welcher sich um einen gewissen Winkelbereich schwenken lässt, um dem jeweiligen Beugewinkel angepasst werden zu können. Bei einem Winkelscan wird nun der Detektor über einen vorbestimmten Winkelbereich bewegt und die Zählereignisse in Abhängigkeit des Winkels erfasst. Dabei werden die Beugungsreflexe in ihren diskreten Winkeln erfasst.

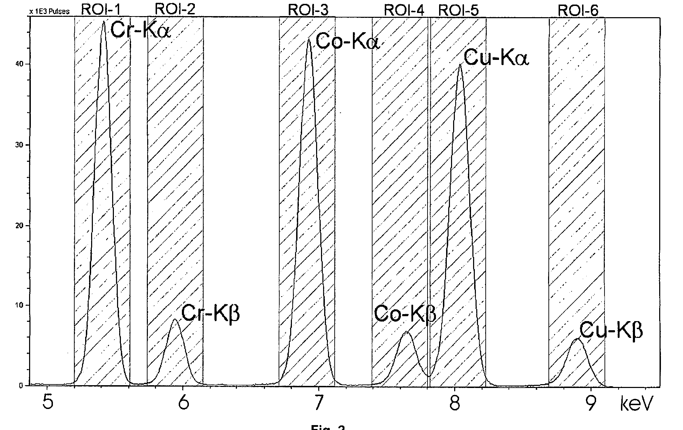

In **Fig. 2** ist ein Energiespektrum dargestellt, welches mit dem erfindungsgemäßen Verfahren aufgenommen wurde. Dargestellt sind die charakteristischen K-alpha- und K-beta-Linien von Kupfer (Cu), Kobalt (Co) und Chrom (Cr). Die Energiefenster ROI (Region-Of-Interest) 1 bis ROI 6 sind so gesetzt, dass die Linien (Nutzstrahlung) näherungsweise vollständig abgedeckt sind, ohne dass sich die ROIs überlappen.

### Bezugszeichenliste

- 1: Vorrichtung
- 2: Probe
- 3: Röntgenquelle
- 4: Röntgenanode
- 5: Detektor
- 6: Röntgenstrahlung

## Patentansprüche

1. Verfahren zur Durchführung einer röntgendiffraktrometrischen Analyse einer kristallinen und/oder amorphen Probe, mittels eines röntgenoptischen Aufbaus mit einer Röntgenquelle, die eine aus einer Mischanordnung mindestens zweier Metalle aufgebaute Röntgenanode aufweist,
**dadurch gekennzeichnet,**
**dass** ein energiedispersiver Halbleiterdetektor zur Aufnahme von Zählereignissen aus der von der Probe kommenden Röntgenstrahlung verwendet wird,
**dass** für die Röntgenanode als Mischanordnung mindestens zweier Metalle eine gesinterte Pulvermischung verwendet wird,
**dass** von der Probe gebeugte oder gestreute Röntgenstrahlung mit unterschiedlichen charakteristischen Energielinien, die zu den Metallen der verwendeten Mischanordnung der Röntgenanode gehören, simultan während eines Winkelscans aufgenommen wird, und
**dass** die charakteristischen Energielinien sowohl der Kα, als auch der Kβ Energien mehrerer oder aller in der Mischanordnung vorkommenden Metalle simultan während eines Winkelscans aufgenommen werden.

2. Verfahren nach Anspruch 1, **dadurch gekennzeichnet, dass** die aufzunehmenden Zählereignisse in mehreren, vom Benutzer frei im Energiespektrum festsetzbaren Bereichen gezählt werden.

3. Verfahren nach Anspruch 2, **dadurch gekennzeichnet, dass** für jeden festgesetzten Bereich ein separates Diffraktogramm erstellt wird.

4. Verfahren nach einem der vorhergehenden Ansprüche, **dadurch gekennzeichnet, dass** das Mischungsverhältnis der Metalle in der Röntgenanode so gewählt wird, dass ihre Kα-Energielinien bei der Messung in ihrer Intensität gleich sind oder ein anderes gewünschtes Intensitätsverhältnis aufweisen.

5. Vorrichtung zur Durchführung des Verfahrens nach einem der vorhergehenden Ansprüche, umfassend einen für die Röntgendiffraktometrie geeigneten röntgenoptischen Aufbau mit einer eine Röntgenanode aufweisenden Röntgenquelle, einer Einrichtung zur Aufnahme von Winkelscans, und einem energiedispersiven Halbleiterdetektor, wobei die Röntgenanode aus einer Mischanordnung mindestens zweier Metalle mit unterschiedlichen charakteristischen Energielinien aufgebaut ist, und die Mischanordnung der mindestens zwei Metalle aus einer gesinterten Pulvermischung besteht.

6. Vorrichtung nach Anspruch 5, **dadurch gekennzeichnet, dass** die Mischanordnung der Röntgenanode Cu und Co enthält.

7. Vorrichtung nach Anspruch 6 **dadurch gekennzeichnet, dass** die Mischanordnung der Röntgenanode zusätzlich Cr und/oder Fe enthält.

8. Vorrichtung nach Anspruch 6 oder 7 **dadurch gekennzeichnet, dass** die Mischanordnung der Röntgenanode zusätzlich Molybdän enthält.

9. Vorrichtung nach einem der Ansprüche 5 bis 8, **dadurch gekennzeichnet, dass** der energiedispersive Halbleiterdetektor ein ein- oder mehrdimensionaler Arraydetektor ist.

## Claims

1. Method for performing an X-ray diffractometry analysis of a crystalline and/or amorphous sample by means of an X-ray optical apparatus comprising an X-ray source which comprises an X-ray anode constructed from a mixed configuration of at least two metals,
**characterized in that**
an energy-dispersive semi-conductor detector is used for acquiring counter events from the X-rays emanating from the sample,
a sintered powder mixture is used as mixed configuration of at least two metals for the X-ray anode,
X-rays diffracted or scattered by the sample with different characteristic energy lines belonging to the metals of the mixed configuration of the X-ray anode are simultaneously acquired during an angle scan, and
the characteristic energy lines of both the Kα and the Kβ energies of several or of all the metals that are present in the mixed configuration are acquired simultaneously during an angle scan.

2. Method according to claim 1, **characterized in that** the counter events to be acquired are counted in several ranges that can be freely defined in an energy spectrum by a user.

3. Method according to claim 2, **characterized in that** a separate diffractogram is created for each defined range.

4. Method according to any one of the preceding claims, **characterized in that** the mixture ratio of the metals in the X-ray anode is selected such that intensities of measured Kα energy lines are equal or exhibit a different desired intensity ratio.

5. Device for performing the method according to any one of the preceding claims, the device comprising an X-ray optical apparatus suitable for X-ray diffractometry, with an X-ray source comprising an X-ray anode, a device for acquiring angle scans, and an energy-dispersive semi-conductor detector, wherein the X-ray anode is constructed from a mixed configuration of at least two metals with different characteristic energy lines and the mixed configuration of the at least two metals comprises a sintered powder mixture.

6. Device according to claim 5, **characterized in that** the mixed configuration of the X-ray anode contains Cu and Co.

7. Device according to claim 6, **characterized in that** the mixed configuration of the X-ray anode additionally contains Cr and/or Fe.

8. Device according to claim 6 or 7, **characterized in that** the mixed configuration of the X-ray anode additionally contains molybdenum.

9. Device according to any one of the claims 5 to 8, **characterized in that** the energy-dispersive semi-conductor detector is a one-dimensional or multi-dimensional array detector.

## Revendications

1. Procédé pour réaliser une analyse par diffractométrie X d'un échantillon cristallin et/ou amorphe au moyen d'un dispositif optique à rayons X comprenant une source de rayons X qui présente une anode à rayons X constituée d'un arrangement mixte d'au moins deux métaux,
**caractérisé en ce**
**qu'**un détecteur à semi-conducteurs par dispersion d'énergie est utilisé pour enregistrer des événements de comptage du rayonnement X provenant de l'échantillon,
**qu'**un mélange de poudres fritté est utilisé comme arrangement mixte d'au moins deux métaux pour l'anode à rayons X,
**que** le rayonnement X diffracté ou dispersé par l'échantillon, avec des raies d'énergie caractéristiques différentes qui correspondent aux métaux de l'arrangement mixte utilisé pour l'anode à rayons X, est enregistré simultanément pendant un balayage angulaire, et
**que** les raies d'énergie caractéristiques aussi bien des énergies de Kα que de Kβ de plusieurs ou de tous les métaux présents dans l'arrangement mixte sont enregistrées simultanément pendant un balayage angulaire.

2. Procédé selon la revendication 1, **caractérisé en ce que** les événements de comptage à enregistrer sont comptés dans plusieurs gammes, librement définissables par l'utilisateur dans le spectre énergétique.

3. Procédé selon la revendication 2, **caractérisé en ce qu'**un diffractogramme séparé est réalisé pour chaque gamme définie.

4. Procédé selon l'une des revendications précédentes, **caractérisé en ce que** le rapport de mélange des métaux dans l'anode à rayons X est choisi de façon que leurs raies d'énergie Kα soient d'intensité égale ou présentent un autre rapport d'intensité souhaité lors de la mesure.

5. Dispositif pour mettre en oeuvre le procédé selon l'une des revendications précédentes, comprenant un dispositif optique à rayons X convenant pour la diffractométrie X, comprenant une source de rayons X présentant une anode à rayons X, un dispositif d'enregistrement de balayages angulaires et un détecteur à semi-conducteurs par dispersion d'énergie, l'anode à rayons X étant constituée d'un arrangement mixte d'au moins deux métaux avec des raies d'énergie caractéristiques différentes et l'arrangement mixte desdits au moins deux métaux étant composé d'un mélange de poudres fritté.

6. Dispositif selon la revendication 5, **caractérisé en ce que** l'arrangement mixte de l'anode à rayons X contient Cu et Co.

7. Dispositif selon la revendication 6, **caractérisé en ce que** l'arrangement mixte de l'anode à rayons X contient en outre Cr et/ou Fe.

8. Dispositif selon la revendication 6 ou 7, **caractérisé en ce que** l'arrangement mixte de l'anode à rayons X contient en outre du molybdène.

9. Dispositif selon l'une des revendications 5 à 8, **caractérisé en ce que** le détecteur à semi-conducteurs par dispersion d'énergie est un détecteur à matrice uni- ou multidimensionnelle.
